# EUROPÄISCHE PATENTANMELDUNG

(11) **EP 0 569 878 A2**
(43) Veröffentlichungstag der Anmeldung: **18.11.1993**
(21) Anmeldenummer: 93107443.9
(22) Anmeldetag: 07.05.1993
(51) Int. Cl.: B32B 27/18, B32B 27/36

(54) **Folie-geschützter Polycarbonatkunststoffkörper**

(30) Priorität: 15.05.1992 DE 4216103
(71) Anmelder: RÖHM GMBH, D-64293 Darmstadt (DE)
(72) Erfinder: Apprecht, Detlef, W-6146 Alsbach-Hähnlein 2 (DE); Horn, Hermann, W-6103 Griesheim (DE)

(57) **Zusammenfassung**

Ein verbesserter, UV-Strahlungs- und witterungsgeschützter Polycarbonatkunstoffkörper (Fig. 1), bestehend aus einer gegebenenfalls durchgehende Hohlräume aufweisenden Kernschicht aus Polycarbonatkunststoff (1), die nicht mehr als 0,5 Gew.-% eines UV-Absorbers enthält und der auf wenigstens einer Seite der Kernschicht eine UV-absorbierende Deckschicht (6) trägt, und der durch Kaschieren der Polycarbonatkunststoffkernschicht mit einer UV-Absorber-haltigen Polycarbonatkunstoffolie hergestellt wird.

## Beschreibung

Die Erfindung betrifft Polycarbonatkunststoffkörper, deren Oberflächen wenigstens teilweise mit einer Folie aus Kunststoff, die UV-Absorber enthält, fest verbunden ist.

### Stand der Technik

Polycarbonatkunststoffe, wie vor allem das Bisphenol A-Polycarbonat, zeichnen sich bei guter Transparenz durch ihre hohe Zähigkeit aus, und werden daher als praktisch unzerbrechliche Verglasungsmaterialien eingesetzt. Ein besonderer Nachteil dieser Kunststoffe, insbesondere für Außenanwendungen, ist ihre begrenzte Wetterfestigkeit, vor allem ihre Schädigung durch UV-Strahlung.

In den Kunststoff eingearbeitete UV-Absorber vermögen das Innere des Polycarbonatkunststoffkörpers zu schützen, jedoch nicht dessen Oberfläche. Nach DE-OS 16 94 273 wird zu deren Schutz eine Lackschicht aufgebracht, die aus 3 Teilen eines UV-Absorbers und 5 Teilen Polymethylmethacrylat oder Polycarbonat bestehen kann.

Auch durch Koextrusion lassen sich schützende Deckschichten auf Polycarbonat-Formkörper, vornehmlich auf Polycarbonat-Kunststofftafeln aufbringen. Die DE-OS 28 32 676 beschreibt die Koextrusion von Polycarbonattafeln mit einer Polymethylmethacrylatschicht mit einem Gehalt an UV-Absorber, und die EP-A 0 110 221 beschreibt eine Kunststofftafel aus Polycarbonatkunststoff, die aus einer Polycarbonat-Kernschicht und aus wenigstens einer mit der Kernschicht koextrudierten Deckschicht aus UV-Absorber-haltigem Polycarbonatkunststoff besteht.

Bei beiden Auftragungstechniken werden Polymethacrylatkunststoffe für die Deckschichten bevorzugt verwendet, weil sie hoch witterungsbeständig sind und diese Oberflächen weniger durch UV-Strahlung geschädigt werden als die von Polycarbonaten. Ein Nachteil der Deckschichten aus Polymethacrylat ist ihre geringe Zähigkeit gegenüber denjenigen aus Polycarbonaten. Dies macht sich vor allem an unter Spannung stehenden Polymethacrylat-beschichteten Polycarbonattafeln durch Ausbildung von Rissen in der Deckschicht bemerkbar, was zu einem Mattwerden der anfänglich glänzenden Oberfläche führt, und die Risse haben die Neigung in die Polycarbonatschicht weiter zu laufen, wodurch sich die mechanischen Eigenschaften des Polycarbonatkunststoffes verschlechtern. Vor allem nimmt die Bruchempfindlichkeit gegen Hagelschlag zu. Diese Nachteile machen sich bei Hohlprofilplatten bei deren gebogener Verlegung, durch Auftreten hoher Zugspannungen auf der konvexen Seite, noch stärker bemerkbar.

Der Nachteil der Polycarbonat-Polycarbonat Koextrusion liegt in der Anwendung zu hoher, aber notwendiger Extrusionstemperaturen, bei denen UV-Absorber sich verflüchtigen können, wodurch dann eine gleichmäßig hohe und notwendige UV-Absorber-Konzentration in der Deckschicht nicht vorhanden sein kann, und was auch an der Koextrusionsanlage schwierig kontrollierbar und damit beim Verfahren nicht zu regulieren ist.

### Aufgabe und Lösung

Ziel der Erfindung war es, Polycarbonatkunststoffkörper, insbesondere flache Tafeln, mit einer Deckschicht aus UV-Absorber-haltigem Polycarbonat zur Verfügung zu stellen, bei denen die vorgegebenen UV-Absorber-Konzentrationen eingehalten sind.

Es wurde gefunden, daß durch Aufkaschierung einer UV-Absorber-haltigen Polycarbonatfolie auf die Polycarbonatkunststoffkörper, die bei den im Stand der Technik angegebenen Verfahren geschilderten Nachteile vermieden werden, und eine volle Schutzwirkung der Deckschicht erzielt wird. Das Verfahren zur Herstellung des Verbundes läßt sich kontinuierlich durchführen und vermeidet auch die Nachteile, die Verfahren zur Aufbringung der Deckschicht durch Lackierung, wie vor allem Gefährdung durch Lösemittel, mit sich bringen.

Die aufzukaschierende Polycarbonatfolie enthält wenigstens 1 Gew.-% eines oder mehrerer für Kunststoffe üblichen UV-Absorber.

Die Erfindung betrifft ein Verfahren zur Herstellung eines Kunststoffverbundes, bestehend aus einer Kernschicht aus Polycarbonatkunststoff, die nicht mehr als 0,5 Gew.-% eines UV-Absorbers enthält, und auf wenigstens einer Seite der Kernschicht aus einer Deckschicht aus Polycarbonatkunststoff, die wenigstens 1 Gew.-% eines UV-Absorbers enthält, dadurch gekennzeichnet, daß die Deckschicht durch Kaschierung von UV-Absorber-haltiger Polycarbonatkunststoffolie auf die Polycarbonatkernschicht aufgebracht wird.

### Ausführung der Erfindung

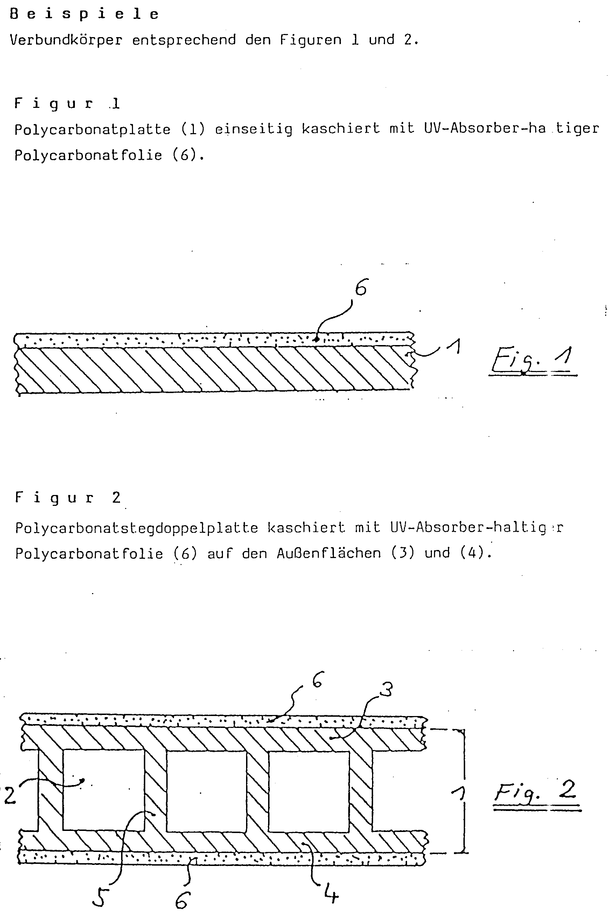

Die einfachste Ausführungsform ist in **Figur 1** in einem ausschnittsweisen Querschnitt einer einseitig beschichteten Volltafel dargestellt. **Figur 2** zeigt in gleicher Darstellungsweise als bevorzugte Ausführungsform eine extrudierte Hohlkammerplatte mit beidseitiger Beschichtung.

### Die Kernschicht (1)

einer Volltafel kann eine Dicke von z.B. 2 bis 10 mm, vorzugsweise 3 bis 8 mm haben. In der Regel sind die Außenseiten der Kernschicht parallel zueinander und eben, jedoch können sie auch gewellt oder - namentlich im eingebauten Zustand - einachsig gebogen sein. Die Kernschicht kann auch kuppelförmig gewölbt oder in anderer Weise dreidimensional verformt sein.

Die Kernschicht (1) kann auch eine oder mehrere Hohlkammern (2) enthalten, die sich vorzugsweise parallel zueinander geradlinig durch die Kernschicht erstrecken. Vorzugsweise handelt es sich um Stegdoppel- oder Dreifachplatten, in denen die Kernschicht (1) aus zwei ebenen, parallelen Wänden (3,4) besteht, die durch Stege (5) einstückig miteinander verbunden sind. Die Hohlkammern (2) können gegebenenfalls durch eine oder mehrere weitere Zwischenwände unterteilt sein. Die Wände (3,4) und Stege (5) haben gewöhnlich Wandstärken von 0,3 bis 2 mm. Die Kernschicht einschließlich der Hohlkammern ist beispielsweise 5 bis 50, vorzugsweise 6 bis 10 mm dick.

Die Flächenausdehnung und -gestalt der Kernschicht richtet sich nach den Anforderungen der vorgesehenen Verwendung und ist im Rahmen der technischen Herstellungsbedingungen weitgehend beliebig. Flach liegende Tafeln haben zweckmäßig eine rechteckige Fläche und Kantenlängen von 0,5 bis 6 m. Längere Volltafeln oder -bahnen können gerollt werden.

### Die Deckschicht (6) aus Folien

Die Kernschicht (1) trägt auf wenigstens einer, vorzugsweise auf beiden Seiten eine Deckschicht (6), die sich von der Kernschicht durch einen höheren Gehalt an UV-Absorbern unterscheidet, und die erfindungsgemäß durch Aufkaschieren UV-Absorber-haltiger Polycarbonatfolien erzeugt wird. Solche UV-Absorber-haltige Polycarbonatfolien sind beispielsweise in der japanischen Patentschrift JP 44,028189, Ref.: CA 72,122441, beschrieben. Ihre Dicke soll ausreichen, um eine senkrecht einfallende UV-Strahlung von 280 bis 380 nm zu mehr als 90 %, bevorzugt mehr als 99 % (bezogen auf den nicht reflektierten Anteil) zu absorbieren. Dafür reicht eine Dicke der aufzubringenden Folien von 10 bis 100 µm aus, jedoch können Folien mit Schichtdicken bis 1000 µm nach dem erfindungsgemäßen Verfahren aufgebracht sein.

Die zur Kaschierung eingesetzte Folie und damit die erzeugte Deckschicht enthält wenigstens 1 Gew.-% und vorzugsweise 3 bis 15 Gew.-%, vor allem 5 bis 10 Gew.-% eines üblichen UV-Absorbers für Kunststoffe. Der bevorzugte Gehalt an UV-Absorbern liegt zwischen 0,4 und 2,5 g/m², kann aber gegebenenfalls bis 5 g/m² gesteigert werden. Die Konzentration wird daher um so höher gewählt, je dünner die Deckschicht ist, damit die erforderliche Absorption innerhalb der Deckschicht eintritt. Unterhalb 0,4 g/m² ist der Schutz der Oberfläche der Deckschicht gegen Verwitterung nicht mehr gewährleistet. Der Schutz ist um so wirksamer, je höher die insgesamt je Quadratmeter eingesetzte Absorbermenge liegt. Geeignete UV-Absorber sind 2-Hydroxy-4-n-octoxybenzo-phenon, 2-Hydroxy-4-methoxybenzophenon, 2-(2'-Hydroxy-5'-methylphenyl)-benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Handel erhältlich. Besonders bevorzugt sind UV-Absorber von geringer Flüchtigkeit, d.h. besonders solche mit möglichst hohem Molekulargewicht. Der UV-Absorber soll in der gewählten Konzentration mit dem Kunststoffmaterial möglichst homogen mischbar sein. Die Kernschicht kann völlig frei von UV-Absorbern sein oder enthält diese in deutlich geringerer Konzentration als die Deckschicht. Eine Konzentration von 0,5 Gew.-% wird nicht überschritten.
Der Polycarbonatkunststoff leitet sich in der Regel von einem aromatischen Bisphenol oder einem Gemisch solcher Bisphenole ab, insbesondere Bisphenol A. Alle Polycarbonatkunststoffe, die sich zu Tafeln von hoher Zähigkeit und Lichtdurchlässigkeit verarbeiten lassen, sind als Werkstoff sowohl für die Kernschicht als auch für die Deckschicht geeignet.

Diese Schichten bestehen vorzugsweise, aber nicht zwangsläufig, aus dem gleichen extrudierbaren Polycarbonatkunststoffmaterial, abgesehen von der Konzentration des UV-Absorbers. Sie können glasklar und farblos oder in üblicher Weise gefärbt, getrübt oder pigmentiert sein, jedoch hat die Erfindung für hoch lichtdurchlässige Massen die größte Bedeutung.

### Herstellung der Deckschicht

Die erfindungsgemäße Aufbringung der Deckschicht wird durch Kaschieren der vorgefertigten Polycarbonatfolie, d.h. unter Druck im Spalt eines Walzenpaares, vor allem in Kalandern, auf die Polycarbonatkernschicht durchgeführt. Die Verbundhaftung wird vorzugsweise durch die mechanische Verankerung der Folie mit den eingestellten thermischen Bedingungen, als sogenannte thermoplastische Kaschierung, erreicht. Auch das Kaschieren in Gegenwart von Klebern unter Druck ist möglich. Vorteilhaft schließt man das Kaschierverfahren unmittelbar an die Extrusion der Polycarbonatkernschicht an bzw. integriert das Kaschierverfahren maschinell mit dem Extrusionsverfahren.

### Anwendung

Die erfindungsgemäßen Tafeln eignen sich als Verglasungs- und Bauelemente, vor allem im Freien, wo die dem Sonnenlicht ausgesetzte Seite die Deckschicht trägt. Mit Vorteil werden sie da eingesetzt, wo Dehnungskräfte auf die Tafeln einwirken können, z.B. bei gebogener Verlegung von Volltafeln oder Stegdoppelplatten. Diese Verlegungsart wird im Gewächshausbau häufig angewendet und hat in der Vergangenheit zu schweren Hagelschäden geführt. Durch die durchgehend hohe Hagelschlagbeständigkeit des erfindungsgemäßen Verbundes mit Werten von ca. 20 Joule werden derartige Schäden vermieden. Polymethacrylatplatten gleicher Dimensionen haben vergleichsweise bei analogen Messungen Werte unter 1 Joule. Die Hagelbeständigkeit wird nach einer internen Methode durch Beschießen der Materialien mit Polyamidkugeln vorgegebener Energie bestimmt.

## Patentansprüche

1. Verfahren zur Herstellung eines Kunststoffverbundes, bestehend aus einer Kernschicht aus Polycarbonatkunststoff, die nicht mehr als 0,5 Gew.-% eines UV-Absorbers enthält, und auf wenigstens einer Seite der Kernschicht aus einer Deckschicht aus Polycarbonatkunststoff, die wenigstens 1 Gew.-% eines UV-Absorbers enthält,
dadurch gekennzeichnet,
daß die Deckschicht durch Kaschierung von UV-Absorber-haltiger Polycarbonatkunststoffolie auf die Polycarbonatkernschicht aufgebracht wird.

2. Verfahren nach Anspruch 1, dadurch gekennzeichnet, daß die Dicke der Folie 10 bis 1000 µm, vorzugsweise 10 bis 100 µm beträgt.

3. Verfahren nach den Ansprüchen 1 und 2, dadurch gekennzeichnet, daß die Kernschicht eine Dicke von 0,3 bis 20 mm hat.

4. Verfahren nach den Ansprüchen 1 bis 3, dadurch gekennzeichnet, daß die Kernschicht Stegdoppel- oder Dreifachplatten sind.

5. Verfahren nach den Ansprüchen 1 bis 4, dadurch gekennzeichnet, daß die Haftung des Verbundes durch thermoplastische Kaschierung erreicht wird.

6. Verfahren nach den Ansprüchen 1 bis 4, dadurch gekennzeichnet, daß die Haftung durch Klebekaschierung erreicht wird.

7. Kunststoffverbunde aus Polycarbonatkunststoff mit Polycarbonatkunststoff, hergestellt nach einem Verfahren der Ansprüche 1 bis 6.
